# EUROPÄISCHE PATENTSCHRIFT

(11) **EP 3 130 828 B1**
(45) Veröffentlichungstag und Bekanntmachung des Hinweises auf die Patenterteilung: **06.11.2019**
(21) Anmeldenummer: 16178203.2
(22) Anmeldetag: 06.07.2016
(51) Int. Cl.: F16K 11/07, F16K 27/04, F16K 31/06

(54) **HYDRAULIKVENTIL**
HYDRAULIC VALVE
VANNE HYDRAULIQUE

(30) Priorität: 13.08.2015 DE 102015113331; 09.03.2016 DE 102016104310; 02.05.2016 DE 102016108067
(43) Veröffentlichungstag der Anmeldung: 15.02.2017
(73) Patentinhaber: Hilite Germany GmbH, 97828 Marktheidenfeld (DE)
(72) Erfinder: Boban, Drazen, 72622 Nürtingen (DE); Jacob, Thomas, 70199 Stuttgart (DE); Knecht, Andreas, 72072 Tübingen (DE); Senst, Oliver, 70178 Stuttgart (DE); Viertler, Daniel, 72574 Bad Urach (DE)

(56) Entgegenhaltungen:
- EP-A1- 2 320 114
- DE-A1-102009 001 662
- DE-A1-102011 053 023
- DE-A1-102012 223 430
- US-A1- 2005 178 451
- US-A1- 2012 061 600

## Beschreibung

### Technisches Gebiet

Die Erfindung betrifft ein Hydraulikventil mit einem Hydraulikteil und einem Magnetteil, insbesondere für eine mechatronische Getriebesteuerung eines Kraftfahrzeugs.

### Stand der Technik

Um bei großen Getriebeölwechselintervallen, im Extremfall bei so genannten Lebensdauerfüllungen, dennoch ausfallsicher zu sein, muss das Getriebeventil eine hohe Robustheit aufweisen. Hohe Robustheit lässt sich mit einem großen Spiel bei den zu bewegenden Teilen erzielen, was jedoch zu Lasten der Regelgüte geht.

Aus der DE 10 2011 053 023 A1 ist ein Hydraulikventil bekannt, das eine hohe Robustheit neben einer hohen Regelgüte aufweist. Die hohe Robustheit wird erreicht, indem Schmutzpartikel im Betriebsmedium nicht zum Verklemmen des Getriebeventils kommen können, da der Anker so große Axialkräfte aufbringen kann, dass dieser sich stets frei reißen kann. Gleichzeitig weist das Hydraulikventil eine hohe Regelgüte auf, die mittels mehrerer konstruktiver Maßnahmen erreicht wird. So werden insbesondere die Querkräfte zwischen dem Anker und einem Polrohr minimiert.

Aus der EP 2 320 114 A1 ist ein Magnetventil bekannt. Dieses Magnetventil umfasst einen Magnetteil, welcher ein Spritzgussgehäuse aufweist, auf dessen Innenseite zur Bildung eines Magnetkreises eine Polscheibe, ein Polrohr, eine Spule, ein nichtmagnetisches Abstandselement und ein Polkern fixiert sind.

Die US 2005/0178451 A1 offenbart ein Magnetventil mit einem Hydraulik- und einem Magnetteil. Eine in einer Kolbennut fixierte Membran ist zwischen zwischen einer Ventilbuchse und einem Magnetjoch eingespannt. Das Magnetteil ist fluidtechnisch über eine im Kolben ausgebildete Fluidpassage mit der Magnetventilaußenseite verbunden.

Aus der DE 10 2009 001 662 A1 ist ferner ein Dosierventil bekannt, dessen Ventilkammer, welche mit unter Druck stehenden Medium beaufschlagbar ist, mittels einer ersten Membran abgedichtet ist. Eine zweite Membran ist zur Erzeugung einer Verschiebekraft rückseitig der ersten Membran angeordnet.

Ein solches konstruktives Merkmal zur Verringerung der Querkräfte ist dort ein sehr enges Laufspiel zwischen dem Anker und dem Polrohr, das mittels einer sehr dünnen Trennschicht anstelle beispielsweise einer Hülse oder einer dicken Beschichtung erreicht wird. Eine solche sehr dünne Trennschicht liegt sinnvollerweise bei einer Schichtdicke von 10 µm bis 60 µm. Die dünne Trennschicht kann beispielsweise chemisch oder galvanisch erreicht werden. Als chemisches Verfahren kann beispielweise das chemische vernickeln Anwendung finden. Hier hat sich eine Schichtdicke von 45 µm als ideal erwiesen. Die Mindestdicke von 10 µm ist zumindest theoretisch darstellbar. Mit den derzeitigen vorhandenen Verfahren hat sich eine Schichtdicke ab 20 µm als herstellbar erwiesen. Im Gegensatz beispielsweise zur galvanischen Vernickelung wird beim chemischen Verfahren keine elektrische Spannung über Elektroden angelegt. Die Schichtdicke ist bei der chemischen Vernickelung sehr homogen.

### Offenbarung der Erfindung

Aufgabe der Erfindung ist es, ein verbessertes Hydraulikventil zu schaffen, das eine möglichst hohe Robustheit und gleichzeitig eine kostengünstiger Bauweise vereint.

Die vorgenannte Aufgabe wird mit den Merkmalen der unabhängigen Ansprüche gelöst.

Günstige Ausgestaltungen und Vorteile der Erfindung ergeben sich aus den weiteren Ansprüchen, der Beschreibung und der Zeichnung.

Es wird ein Hydraulikventil mit einer Ventilbuchse und einem in der Ventilbuchse entlang einer Längsachse der Ventilbuchse axial verschiebbaren Ventilkolben vorgeschlagen. Das Hydraulikventil umfasst weiter einen Versorgungsanschluss zum Zuführen eines Hydraulikfluids, wenigstens einen Arbeitsanschluss und wenigstens einen Tankabfluss zum Ableiten des Hydraulikfluids, wobei der Ventilkolben mit Hilfe eines elektromagnetischen Aktuators des Hydraulikventils verschiebbar ist und die Ventilbuchse einen Hydraulikteil und der Aktuator einen Magnetteil des Hydraulikventils bilden.

Zur Sicherstellung der Funktion von Hydraulikventilen in mechatronischen Getriebesteuerungen ist es grundsätzlich notwendig, die Lagerungen von Magneten gegen das Einwirken externer Einflüsse so robust wie möglich auszuführen. So ist neben der Erzielung einer mechanischen Robustheit die Robustheit gegen kontaminierte Betriebsmedien von entscheidender Bedeutung. Insbesondere große Partikel können aufgrund der geringen Arbeitsspalte und Laufspiele zur Beeinträchtigung der Magnet- und Ventilfunktion und damit zur Beeinträchtigung der magnetischen und/oder hydraulischen Funktion bis zum Ausfall durch Blockieren führen. Die direkte Anbindung der magnetischen und hydraulischen Bereiche, d.h. des Magnet- und des Hydraulikteils des Hydraulikventils begünstigt einen Austausch des kontaminierten Mediums.

Erfindungsgemäß ist in der Ventilbuchse ein Dichtelement zur räumlichen Trennung von Magnet- und Hydraulikteil angeordnet, welches von einem als Kolbenstößel ausgebildeten Ende des Ventilkolbens kontaktlos durchragt wird.

Durch die räumliche Trennung von Magnet- und Hydraulikteil des Hydraulikventils kann ein Austausch von Schmutzpartikeln, welche die magnetischen und/oder die hydraulischen Funktionen beeinträchtigen, zwischen dem Magnet- und dem Hydraulikteil des Hydraulikventils deutlich reduziert werden. Insbesondere kann ein negativer Einfluss auf den Ankerlauf im Polrohr und die hierdurch hervorgerufene Magnet/Ventil-Hysterese verhindert werden.

Ferner kann durch das Dichtelement ein Austauschvolumen zwischen dem Magnet- und Hydraulikteil des Hydraulikventils durch eine Verringerung des sich im Magnetteil befindlichen Kolbenstößelvolumens deutlich reduziert werden.

Es erhöhen sich mit einfachen und kostengünstigen Mitteln insgesamt die Robustheit und die Dauerhaltbarkeit des Hydraulikventils aufgrund des geringeren Schmutzeintrages in das Magnetteil. Ebenso können die magnetischen Querkräfte im Bereich des Kolbenstößels und damit die Ventilhysterese reduziert werden.

Das Dichtelement ist in einen Endabschnitt der Ventilbuchse eingepresst vorgesehen, wobei der Endabschnitt wenigstens teilweise von dem Aktuator aufgenommen wird. Dabei stellt der Einpressvorgang ein kostengünstiges und einfaches Verfahren dar, die Abdichtung zwischen Ventil- und Magnetteil des Hydraulikventils herzustellen.

Gemäß einer vorteilhaften Ausführungsform der Erfindung ist das Dichtelement in Form einer im Querschnitt u-förmigen Scheibe mit einem innenliegenden Schenkel und einem außenliegenden Schenkel ausgebildet und kann dadurch als kostengünstiges Tiefziehteil ausgebildet sein. Vorzugsweise durchragt der Kolbenstößel den innenliegenden Schenkel des Dichtelements kontaktlos, so dass eine Abdichtung zwischen Dichtelement und Kolbenstößel als Spaltdichtung ausgebildet ist. Dabei kann durch das Verhältnis Dichtlänge zu Spalthöhe des Dichtspaltes in einfacher Weise ein Austausch des Hydraulikfluids auf ein Minimum reduziert werden.

Eine andere vorteilhafte Ausführungsform sieht vor, dass das Dichtelement im Wesentlichen zylindrisch ausgebildet ist und eine Bohrung aufweist, welche der Kolbenstößel kontaktlos durchragt, so dass eine Abdichtung zwischen Dichtelement und Kolbenstößel als Spaltdichtung ausgebildet ist. Dabei ist das Dichtelement vorzugsweise als Drehteil ausgebildet und weist zur Abdichtung gegenüber der Ventilbuchse Durchmesservergrößerungen auf, welche nach dem Einpressen in den Endabschnitt der Ventilbuchse mittels einer Presspassung dichtend an der Ventilbuchse anliegen.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: einen Schnitt durch ein Hydraulikventil nach einem Ausführungsbeispiel der Erfindung in einer unbestromten Ausgangsstellung;
- Fig. 2: einen vergrößerten Schnitt durch ein Dichtelement des Hydraulikventils gemäß Fig. 1;
- Fig. 3: einen Schnitt durch ein Hydraulikventil nach einem zweiten Ausführungsbeispiel der Erfindung in einer unbestromten Ausgangsstellung und
- Fig. 4: einen vergrößerten Schnitt durch ein Dichtelement des Hydraulikventils gemäß Fig. 3.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

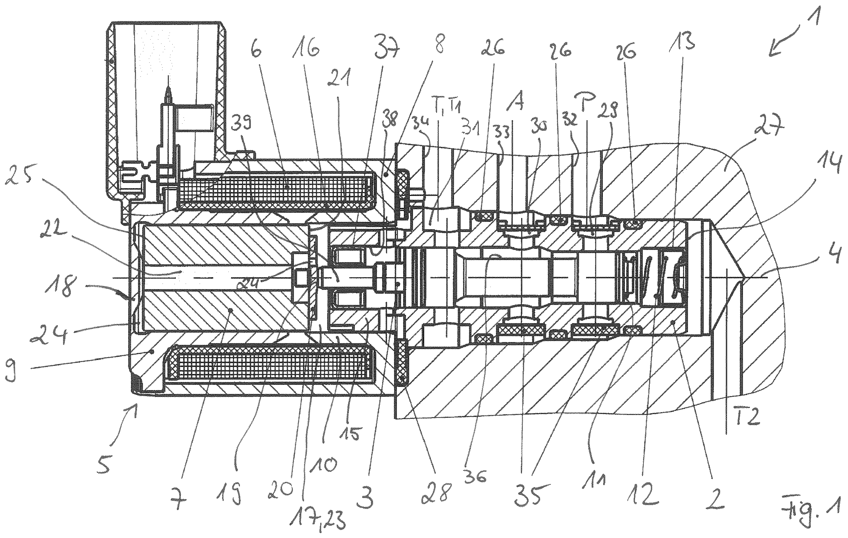

Figur 1 zeigt einen Längsschnitt durch ein Hydraulikventil 1 nach einem Ausführungsbeispiel der Erfindung. Das Hydraulikventil 1 in Form eines Proportionalventils dient beispielhaft einer Verwendung in einem automatisierten Getriebe.

Das Hydraulikventil 1 weist eine Ventilbuchse 2 und einen in einer stufenförmigen Bohrung 38 der Ventilbuchse 2 entlang einer Längsachse 4 der Ventilbuchse 2 axial verschiebbaren Ventilkolben 3 auf. Der Ventilkolben 3 ist mit Hilfe eines elektromagnetischen Aktuators 5 des Hydraulikventils 1 verschiebbar. Der Aktuator 5, der einen Magnetteil des Hydraulikventils 1 darstellt, weist einen mit dem Ventilkolben 3 wirkverbundenen Anker 7 auf, der koaxial zu der Ventilbuchse 2 angeordnet ist. Weiter ist der Anker 7 mit Hilfe der den Anker 7 umfassenden Magnetspule 6 bewegbar in einem Gehäuse 8 des Aktuators 5 aufgenommen, wobei der Anker 7 in einem Polrohr 9 und einem Polkern 10 verschiebbar angeordnet ist.

Eine Bestromung der Magnetspule 6 führt zur axialen Verschiebung des Ventilkolbens 3, wobei ein an einer dem Aktuator 5 abgewandten Stirnfläche 11 des Ventilkolbens 3 angeordnetes Rückhalteelement 12 eine Rückhaltekraft auf den Ventilkolben 3 ausübt, gegen die der Ventilkolben 3 zu verschieben ist. Das Rückhalteelement 12, in diesem Ausführungsbeispiel in Form einer Schraubendruckfeder ausgebildet, stützt sich an einem Deckel 13 ab, welcher im Bereich einer vom Aktuator 5 abgewandt ausgebildeten Gehäusestirnfläche 14 mit Presssitz in der Ventilbuchse 2 angeordnet ist.

Die Magnetspule 6 ist radial innen von einem Spulenträger 16 begrenzt im Gehäuse 8 aufgenommen, wobei das Gehäuse 8 einteilig mit dem Polkern 10 ausgebildet ist, welcher dem Polrohr 9 gegenüberliegend angeordnet ist. Der zylinderförmige Polkern 10 ist der Ventilbuchse 2 zugewandt und einen Endabschnitt 15 der Ventilbuchse 2 umfassend angeordnet. Das zylinderförmige Polrohr 9 weist an seinem vom Polkern 10 abgewandt ausgebildeten Ende eine einen Ankerraum 17 begrenzende Wandung 18 auf.

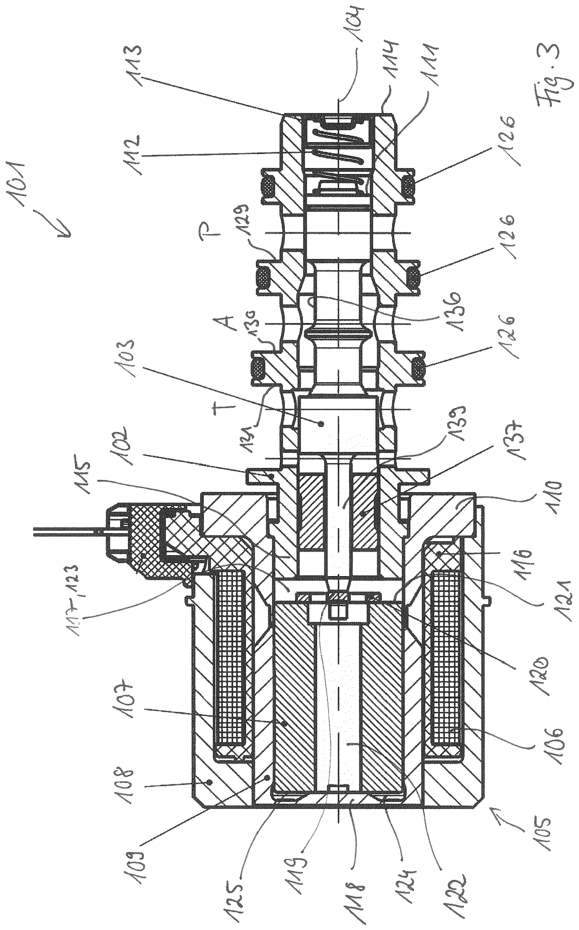

Der nicht leitende Spulenträger 16, in welchem eine Spulenwicklung der Magnetspule 6 aufgenommen ist, weist ein u-förmiges Profil auf und ist auf dem Polrohr 9 sowie auf dem Polkern 10 aufgesetzt. Das Polrohr 9 und der Polkern 10 können gemäß einer in Fig. 3 gezeigten Ausführungsform einteilig und mittels eines sehr dünnen Verbindungsstegs verbunden vorgesehen sein, wobei in diesen Fall der Polkern 10 und das Gehäuse 8 als separate Bauteile ausgebildet sind.

Im Betrieb wird die Magnetspule 6 erregt und erzeugt ein Magnetfeld, welches den Polkern 10, den Anker 7, das Polrohr 9 und das Gehäuse 8 magnetisiert. Der vom Polkern 10 umfasste Endabschnitt 15 ist ebenfalls vom Magnetfeld erfasst.

Ein Kolbenstößel 39 am Ende des Ventilkolben 3 liegt mit seiner dem Anker 7 zugewandt ausgebildeten Stirnfläche 19 an einem Antihaftelement 20 an, das an einer der Stirnfläche 19 zugewandt ausgebildeten ersten Stirnfläche 21 des Ankers 7 angeordnet ist. Somit ist der Ventilkolben 3 mit dem Anker 7 wirkverbunden und eine axiale Bewegung des Ankers 7 ist auf den Ventilkolben 3 übertragbar. Das Antihaftelement 20 ist scheibenförmig ausgebildet und dient der Vermeidung eines Anhaftens des Ankers 7 an der magnetisch leitenden Ventilbuchse 2. Des Weiteren verschließt das Antihaftelement 20 weitestgehend einen durchströmbaren Ankerkanal 22, welcher zentral und sich entlang der Längsachse 4 im Anker 7 erstreckend und als Bohrung ausgebildet ist.

In der dargestellten Position des Hydraulikventils 1 ist zwischen dem Anker 7 und der Ventilbuchse 2 ein ringförmiger erster Raum 23 ausgebildet. Der erste Raum 23 ist über wenigstens eine im Antihaftelement 20 eingebrachte und dieses in Richtung der Längsachse 4 vollständig durchdringende Öffnung 24 über den Ankerkanal 12 mit einem ringförmigen zweiten Raum 24 durchströmbar verbunden, wobei der zweite Raum 24 zwischen einer von der ersten Stirnfläche 21 abgewandt ausgebildeten zweiten Stirnfläche 25 des Ankers 7 und der Wandung 18 des Polrohrs 9 ausgestaltet ist. Das bedeutet, dass jederzeit ein Druckausgleich zwischen den Räumen 23, 24 möglich ist. Somit muss der Anker 7 lediglich eine Verschiebearbeit aufgrund des Ventilkolbens 3 bei einer Verschiebung des Ventilkolbens 3 in die vom Aktuator 5 abgewandte Richtung ausüben und weist zur Verstellung des Ventilkolbens 3 eine schnelle Reaktionszeit auf.

Die Ventilbuchse 2 ist mittels Dichtelementen 26, 28 dichtend beispielsweise in einem Getriebebauteil 27 angeordnet und weist einen Versorgungsanschluss P zum Zuführen des Hydraulikfluids, wenigstens einen Arbeitsanschluss A und wenigstens einen Tankanschluss T zum Ableiten des Hydraulikfluids auf. Dem Versorgungsanschluss P, dem Arbeitsanschluss A und dem Tankanschluss T sind in der Ventilbuchse 2 eine erste Ringnut 29, eine zweite Ringnut 30 bzw. eine dritte Ringnut 31 zugeordnet, die jeweils über Anschlusskanäle 32, 33, 34 mit den Anschlüssen des Getriebebauteils 27 verbunden sind. Es sind weitere zwei Tankanschlüsse T1 und T2 für Leckage in dem Getriebebauteil 27 vorgesehen, wobei die Tankanschlüsse T und T1 in einen gemeinsamen Anschlusskanal 34 des Getriebebauteils 27 münden.

Der Versorgungsanschluss P ist zur Verbindung mit einer nicht näher dargestellten Ölpumpe ausgestaltet, so dass das Hydraulikventil 1 mit dem Hydraulikfluid, welches in diesem Ausführungsbeispiel Öl ist, versorgbar ist. Die erste Ringnut 29 und die zweite Ringnut 30 weisen jeweils ein Sieb 35 zum Filtern des Hydraulikfluids auf.

Der Ventilkolben 3 weist eine umlaufende Ringnut 36 auf. Je nach Positionierung des Ventilkolbens 3 wird entweder der Arbeitsanschluss A mit dem Tankanschluss T, wie dargestellt, oder der Versorgungsanschluss P mit dem Arbeitsanschluss A durchströmbar verbunden.

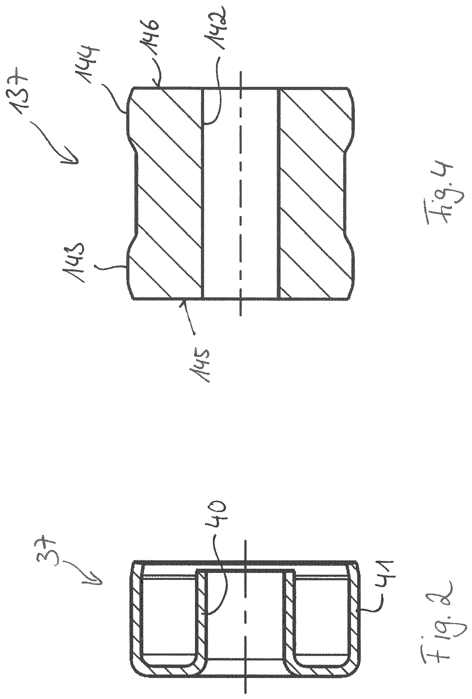

Ein Dichtelement 37 in Form einer im Querschnitt u-förmigen, beispielsweise tiefgezogenen Scheibe dient der räumlichen Trennung von Magnet- und Hydraulikteil des Hydraulikventils 1 und wird in dem Endabschnitt 15 der Ventilbuchse 2 angeordnet. Vorzugsweise wird das Dichtelement 37, welches in Fig. 2 vergrößert dargestellt ist, in die Bohrung 38 eingepresst.

Wie ersichtlich ist, durchragt der Kolbenstößel 39 einen innenliegenden Schenkel 40 des Dichtelements 37 kontaktlos, so dass ein zwischen Kolbenstößel 39 und Schenkel 40 entstehender Spalt als Dichtspalt und damit als Spaltdichtung wirkt, wobei durch das Verhältnis Dichtlänge zu Spalthöhe des Dichtspaltes ein Austausch des Hydraulikfluids auf ein Minimum reduziert werden kann.

Hierdurch kann ein Austausch von Schmutzpartikeln, welche die magnetischen und/oder die hydraulischen Funktionen beeinträchtigen, zwischen dem Magnet- und dem Hydraulikteil des Hydraulikventils 1 deutlich reduziert werden. Insbesondere kann ein negativer Einfluss auf den Ankerlauf im Polrohr 9 und die hierdurch hervorgerufene Magnet/Ventil-Hysterese verhindert werden.

Wie insbesondere Fig. 2 zu entnehmen ist, ist der außenliegende Schenkel 41 an seinem freien Ende nach radial innen gebogen vorgesehen, um die Montage, d.h. das Einpressen des Dichtelementes 37 zu erleichtern.

Durch das Dichtelement 37 kann somit ein Austauschvolumen zwischen dem Magnet- und Hydraulikteil des Hydraulikventils 1 durch eine Verringerung des sich im Magnetteil befindlichen Kolbenstößelvolumens deutlich reduziert werden.

Es erhöhen sich insgesamt die Robustheit und die Dauerhaltbarkeit des Hydraulikventils 1 aufgrund des geringeren Schmutzeintrages in den Magnetteil. Ebenso können die magnetischen Querkräfte im Bereich des Kolbenstößels 39 und damit die Ventilhysterese reduziert werden.

Fig. 3 zeigt einen Längsschnitt durch ein Hydraulikventil 100 nach einem weiteren Ausführungsbeispiel der Erfindung, welches ebenfalls in Form eines Proportionaldruckminderungsventils ausgebildet ist. Gleiche bzw. gleichartige Komponenten sind mit im Vergleich zum ersten Ausführungsbeispiel um 100 erhöhten Bezugszeichen versehen, so dass auf eine wiederholte Beschreibung verzichtet wird.

Das Hydraulikventil 100 weist im Unterschied zum ersten Ausführungsbeispiel ein in Fig. 4 vergrößert dargestelltes Dichtelement 137 auf, das im Wesentlichen zylindrisch ausgebildet ist. Der Kolbenstößel 139 durchragt eine mittige Bohrung 142 des Dichtelementes 137 kontaktlos, welches beispielsweise als Drehteil ausgebildet sein kann. Der hierdurch entstandene Spalt zwischen Dichtelement 137 und Kolbenstößel 139 wirkt vorteilhaft als Spaltdichtung.

Die Abdichtung des Dichtelementes 137 gegenüber der Ventilbuchse 102 erfolgt über Durchmesservergrößerungen 143, 144 im Bereich von Stirnseiten 145, 146, welche nach dem Einpressen in den Endabschnitt 115 der Ventilbuchse 102 mittels einer Presspassung dichtend an der Ventilbuchse 102 anliegen. Die Durchmesservergrößerungen 143, 144 sind beidseits abgeflacht, um das Einpressen des Dichtelementes 137 zu vereinfachen.

## Patentansprüche

1. Hydraulikventil (1,100) mit einer Ventilbuchse (2, 102) und einem in der Ventilbuchse (2, 102) entlang einer Längsachse (4, 104) der Ventilbuchse (2, 102) axial verschiebbaren Ventilkolben (3, 103),
mit einem Versorgungsanschluss (P) zum Zuführen eines Hydraulikfluids, wenigstens einem Arbeitsanschluss (A) und wenigstens einem Tankabfluss (T) zum Ableiten des Hydraulikfluids, wobei der Ventilkolben (3, 103) mit Hilfe eines elektromagnetischen Aktuators (5,105) des Hydraulikventils (1, 101) verschiebbar ist und die Ventilbuchse einen Hydraulikteil und der Aktuator einen Magnetteil des Hydraulikventils bilden, **dadurch gekennzeichnet, dass** in der Ventilbuchse (2, 102) ein Dichtelement (37, 137) zur räumlichen Trennung von Magnet- und Hydraulikteil angeordnet ist, welches von einem als Kolbenstößel (39, 139) ausgebildeten Ende des Ventilkolbens (3, 103) kontaktlos durchragt wird, wobei das Dichtelement (37, 137) in einen Endabschnitt (15, 115) der Ventilbuchse (2, 102) eingepresst vorgesehen ist, wobei der Endabschnitt (15, 115) wenigstens teilweise von dem Aktuator (5, 105) aufgenommen wird.

2. Hydraulikventil (1) nach Anspruch 1, **dadurch gekennzeichnet, dass** das Dichtelement (37) in Form einer im Querschnitt u-förmigen Scheibe mit einem innenliegenden Schenkel (40) und einem außenliegenden Schenkel (41) ausgebildet ist.

3. Hydraulikventil (1) nach Anspruch 2, **dadurch gekennzeichnet, dass** das Dichtelement (37) als Tiefziehteil ausgebildet ist.

4. Hydraulikventil (1) nach Anspruch 2oder 3, **dadurch gekennzeichnet, dass** der Kolbenstößel (39) den innenliegenden Schenkel (40) des Dichtelements (37) kontaktlos durchragt, so dass eine Abdichtung zwischen Dichtelement (37) und Kolbenstößel (39) als Spaltdichtung ausgebildet ist.

5. Hydraulikventil (100) nach Anspruch 1, **dadurch gekennzeichnet, dass** das Dichtelement (137) im Wesentlichen zylindrisch ausgebildet ist und eine Bohrung (142) aufweist, welche der Kolbenstößel (139) kontaktlos durchragt, so dass eine Abdichtung zwischen Dichtelement (137) und Kolbenstößel (139) als Spaltdichtung ausgebildet ist.

6. Hydraulikventil (100) nach Anspruch 5, **dadurch gekennzeichnet, dass** das Dichtelement (137) als Drehteil ausgebildet ist.

7. Hydraulikventil (100) nach Anspruch 5 oder 6, **dadurch gekennzeichnet, dass** das Dichtelement (137) zur Abdichtung gegenüber der Ventilbuchse (102) Durchmesservergrößerungen (143, 144) aufweist, welche nach dem Einpressen in den Endabschnitt (115) der Ventilbuchse (102) mittels einer Presspassung dichtend an der Ventilbuchse (102) anliegen.

8. Hydraulikventil (1, 100) nach einem der vorangegangenen Ansprüche, **dadurch gekennzeichnet, dass** das Hydraulikventil (1, 100) als elektrohydraulisches Proportionalventil insbesondere für eine mechatronische Getriebesteuerung vorgesehen ist.

## Claims

1. Hydraulic valve (1, 100) having a valve bushing (2, 102) and a valve piston (3, 103) which is axially displaceable in the valve bushing (2, 102) along a longitudinal axis (4, 104) of the valve bushing (2, 102),
and having a supply port (P) for the supply of a hydraulic fluid, at least one working port (A) and at least one tank outlet (T) for the discharge of the hydraulic fluid, wherein the valve piston (3, 103) is displaceable with the aid of an electromagnetic actuator (5, 105) of the hydraulic valve (1, 101) and the valve bushing forms a hydraulic part, and the actuator forms a magnet part, of the hydraulic valve, **characterized in that** a sealing element (37, 137) for the spatial separation of the magnet part and the hydraulic part is arranged in the valve bushing (2, 102) and is passed through without contact by one end, formed as a piston plunger (39, 139), of the valve piston (3, 103), wherein the sealing element (37, 137) is provided pressed into an end portion (15, 115) of the valve bushing (2, 102), wherein the end portion (15, 115) is received at least partially by the actuator (5, 105).

2. Hydraulic valve (1) according to Claim 1, **characterized in that** the sealing element (37) is in the form of a cross-sectionally U-shaped plate having an inner limb (40) and an outer limb (41).

3. Hydraulic valve (1) according to Claim 2, **characterized in that** the sealing element (37) is formed as a deep-drawn part.

4. Hydraulic valve (1) according to Claim 2 or 3, **characterized in that** the piston plunger (39) passes through the inner limb (40) of the sealing element (37) without contact, with the result that a seal is formed between the sealing element (37) and the piston plunger (39) as a gap seal.

5. Hydraulic valve (100) according to Claim 1, **characterized in that** the sealing element (137) is of substantially cylindrical form and has a bore (142) through which the piston plunger (139) passes without contact, with the result that a seal is formed between the sealing element (137) and the piston plunger (139) as a gap seal.

6. Hydraulic valve (100) according to Claim 5, **characterized in that** the sealing element (137) is formed as a turned part.

7. Hydraulic valve (100) according to Claim 5 or 6, **characterized in that** the sealing element (137), for sealing with respect to the valve bushing (102), has diameter enlargements (143, 144) which, after the pressing into the end portion (115) of the valve bushing (102) by means of a press fit, bear sealingly against the valve bushing (102).

8. Hydraulic valve (1, 100) according to one of the preceding claims, **characterized in that** the hydraulic valve (1, 100) is provided as an electrohydraulic proportional valve, in particular for a mechatronic transmission controller.

## Revendications

1. Vanne hydraulique (1, 100) comportant une douille de vanne (2, 102) et un piston de vanne (3, 103) pouvant coulisser axialement dans la douille de vanne (2, 102) le long d'un axe longitudinal (4, 104) de la douille de vanne (2, 102),
ladite vanne hydraulique comprenant un raccord d'alimentation (P) destiné à amener un fluide hydraulique, au moins un raccord de travail (A) et au moins une sortie de réservoir (T) destinée à évacuer le fluide hydraulique, le piston de vanne (3, 103) pouvant coulisser à l'aide d'un actionneur électromagnétique (5, 105) de la vanne hydraulique (1, 101) et la douille de vanne formant un élément hydraulique et l'actionneur formant un élément magnétique de la vanne hydraulique, **caractérisée en ce qu'**un élément d'étanchéité (37, 137) est disposé dans la douille de vanne (2, 102) pour séparer spatialement l'élément magnétique et l'élément hydraulique, lequel élément d'étanchéité est traversé sans contact par une extrémité, conçue comme un piston plongeur (39, 139), du piston de vanne (3, 103), l'élément d'étanchéité (37, 137) étant prévu pour être enfoncé dans une partie d'extrémité (15, 115) de la douille de vanne (2, 102), la partie d'extrémité (15, 115) étant au moins partiellement reçue par l'actionneur (5, 105).

2. Vanne hydraulique (1) selon la revendication 1, **caractérisée en ce que** l'élément d'étanchéité (37) est conçu sous la forme d'un disque en forme de U en coupe transversale qui comprend une branche intérieure (40) et une branche extérieure (41).

3. Vanne hydraulique (1) selon la revendication 2, **caractérisée en ce que** l'élément d'étanchéité (37) est conçu comme une pièce emboutie.

4. Vanne hydraulique (1) selon la revendication 2 ou 3, **caractérisée en ce que** le piston plongeur (39) pénètre sans contact dans la branche intérieure (40) de l'élément d'étanchéité (37) de manière à assurer une étanchéité entre l'élément d'étanchéité (37) et le piston plongeur (39) sous la forme d'une boîte à labyrinthe.

5. Vanne hydraulique (100) selon la revendication 1, **caractérisée en ce que** l'élément d'étanchéité (137) est sensiblement cylindrique et comporte un alésage (142) que le piston plongeur (139) traverse sans contact de manière à assurer une étanchéité entre l'élément d'étanchéité (137) et le piston plongeur (139) sous la forme d'une boîte à labyrinthe.

6. Vanne hydraulique (100) selon la revendication 5, **caractérisée en ce que** l'élément d'étanchéité (137) est conçu comme un élément tournant.

7. Vanne hydraulique (100) selon la revendication 5 ou 6, **caractérisée en ce que** l'élément d'étanchéité (137) comporte des augmentations de diamètre (143, 144) pour assurer l'étanchéité par rapport à la douille de vanne (102), lesquelles viennent en appui sur la douille de vanne (102) de manière étanche après enfoncement dans la partie d'extrémité (115) de la douille de vanne (102) par un ajustement serré.

8. Vanne hydraulique (1, 100) selon l'une des revendications précédentes, **caractérisée en ce que** la vanne hydraulique (1, 100) est prévue sous la forme d'une vanne proportionnelle électrohydraulique, destinée en particulier à une commande de transmission mécatronique.
